# EUROPÄISCHE PATENTANMELDUNG

(11) **EP 0 811 410 A1**
(43) Veröffentlichungstag der Anmeldung: **10.12.1997**
(21) Anmeldenummer: 97810351.3
(22) Anmeldetag: 04.06.1997
(51) Int. Cl.: B01D 9/04

(54) **Verfahren und Vorrichtung zur Stofftrennung eines flüssigen Gemisches durch fraktionierte Kristallisation**

(30) Priorität: 05.06.1996 CH 1416/96
(71) Anmelder: Sulzer Chemtech AG, 8404 Winterthur (CH)
(72) Erfinder: Bischof, Rudolf, 9475 Sevelen (CH)
(74) Vertreter: Riederer, Conrad A., Dr.

(57) **Zusammenfassung**

Zur Stofftrennung aus einem flüssigen Gemisch durch Kristallisation werden in einem Kristallisator (S-1,S-2,S-3) die Innenwandungen von Rohren durch Verdampfen eines flüssigen Mediums unter Regelung des Drucks der gasförmigen Phase des Mediums entsprechend der für die Kristallisation benötigten Temperatur gekühlt. Dabei bildet sich an den Aussenwandungen der Rohre eine Kristallisatschicht, die später abgeschmolzen werden kann. Gleichzeitig mit der Kristallisation in einem Kristallisator wird in einem anderen Kristallisator die vorher gebildete Kristallschicht abgeschmolzen. Dies geschieht durch Einführen von gasförmigem Medium, das beim genannten Verdampfen im einen Kristallisator anfällt. Zusätzlich kann noch Wärmeenergie dem Kristallisator, in welchem abgeschmolzen wird, zugeführt werden, um dort flüssiges Medium zu verdampfen, so dass das Abschmelzen beschleunigt wird. Die beiden gleichzeitig arbeitenden Kristallisatoren arbeiten als Verdampfer bzw. als Kondensator einer Kühleinheit (11), was gegenüber bekannten Kristallisationsverfahren zu einer erheblichen Energieeinsparung führt.

## Beschreibung

Die vorliegende Erfindung betrifft ein Verfahren und eine Vorrichtung zur Stofftrennung aus einem flüssigen Gemisch durch fraktionierte Kristallisation.

Nebst den vorherrschenden Destillationsverfahren gewinnen Kristallisationsverfahren zunehmend an Bedeutung. Dies hat verschiedene Gründe. So hat die Kristallisation z.B. den Vorteil, dass wärmeempfindliche Stoffe bei tiefen Temperaturen gewonnen bzw. gereinigt werden können. Auch ist im Gegensatz zur Vakuumdestillation keine teure Vakuuminstallation notwendig. In vielen Fällen können auch höhere Reinheitgrade als mit Destillation erzielt werden.

Die US-A-3 272 875 beschreibt einen Kristallisator mit Rohren, durch welche ein Kühlmittel fliesst und deren Aussenwandung als Kristallisationsfläche dient. Der Kühlmittelkreislauf ist ein sekundärer Kreislauf und führt flüssiges Kühlmittel vom Ausgang einer Umwälzpumpe zu den einen Enden der Rohre, durch diese Rohre hindurch, von den anderen Enden der Rohre zu einem Wärmetauscher und von dort zurück zur Umwälzpumpe. Der Wärmetauscher dient der Uebertragung der Kühlenergie aus einem primären Kreislauf, nämlich dem Kreislauf eines Kühlsystems. Der Produktkreislauf führt von einer Produktumwälzpumpe zu den Rohraussenwänden bei den einen Enden der Rohre und von den anderen Enden der Rohre zu einem Wärmetauscher und von dort zurück zur Produktumwälzpumpe. Der Wärmetauscher im Produktekreislauf erhält Wärmeenergie von einer Wärmequelle.

Im Betrieb des beschriebenen Kristallisators bildet sich an der Aussenwandung der Rohre eine Kristallschicht. Die Druckschrift enthält keine Angaben, wie die Kristallschicht entfernt wird. Es ist aber bekannt, dass die Kristallschicht nach dem Ablassen der Mutterlauge aus dem Produktekreislauf entweder durch Erhöhung der Temperatur im Kühlkreislauf oder durch Einführen und Umwälzen von vorher erzeugtem Produkt abgeschmolzen werden kann. Die zum Abschmelzen notwendige Wärmeenergie kann über den im Produktekreislauf angeordneten Wärmetauscher zugeführt werden. In der zitierten Druckschrift wird nur die labormässige Durchführung des Verfahrens beschrieben. Es finden sich keine Ausführungen darüber, wie das beschriebene Verfahren in die industrielle Praxis umgesetzt werden soll. Insbesondere fehlen auch Angaben zur Durchführung einer mehrstufigen Kristallisation. Es ist aber erkennbar, dass die Notwendigkeit von mehreren Wärmetauschern einen hohen apparativen Aufwand erfordert. Wegen der dadurch vorgegebenen Energieverluste und wegen der gewählten Verfahrensführung entsteht auch ein hoher Energiebedarf, wobei insbesondere die teure Kühlenergie ins Gewicht fällt.

Es sind seit längerer Zeit Bestrebungen im Gange, den für die fraktionierte Kristallisation notwendigen Aufwand an Apparaturen und Energie zu verbessern. So findet sich in der DE-A-17 69 123 die Anregung, den Kristallisator durch das Medium der Kälteanlage direkt zu kühlen, indem eine Dampfentnahme aus dem Mantelraum des Kristallisators erfolgt. Es fehlen aber Angaben, wie dies praktisch verwirklicht werden soll, und es sind in dem Vierteljahrhundert nach der Publikation der genannten Druckschrift auch keine direkt gekühlte Kristallisatoren bekannt geworden.

Im Gegensatz zum Kristallisator der eingangs erwähnten US-A-3 272 875 werden beim Kristallisator nach der DE-A-1769123 die Rohre von aussen her gekühlt und das flüssige Gemisch von oben her auf der Innenseite der Rohre als Rieselfilm aufgegeben. Ferner wird bei einer mehrstufigen Kristallisation nicht für jede Stufe ein Kristallisator vorgesehen. Eine mehrstufige Kristallisation wird vielmehr in verschiedenen Zyklen in einem einzigen Kristallisator durchgeführt. Um die Energiekosten weiter zu reduzieren, wird vorgeschlagen, die im Kondensator der Kälteanlage entstehende Wärme in einem Heizmitteltank teilweise zu speichern und sie später mittels eines Wärmetauschers im Produktekreislauf zum Abschmelzen des Kristallisats zu verwenden. Ueberschüssige Wärme soll durch Kühlwasser oder in extremen Fällen durch eine zweite Kälteanlage abgeführt werden. Nachteilig sind bei diesem bekannten Verfahren der hohe apparative Aufwand und die Energieverluste bei der Energiespeicherung und umformung.

In der nicht-vorveröffentlichten EP-A-0 715 870 wird ein Verfahren zur Stofftrennung aus einem flüssigen Gemisch durch fraktionierte Kristallisation beschrieben, bei welchem eine Kristallschicht auf einer Seite einer Wandung, die auf der anderen Seite gekühlt wird, abgeschieden wird. Die Kühlung erfolgt dadurch, dass ein Medium verdampft wird und der Druck der im Kristallisator befindlichen gasförmigen Phase des Mediums entsprechend der für die Kristallisation benötigten Temperatur geregelt wird. Andererseits lässt man zum Abschmelzen der Kristallschicht oder zum Schwitzen Medium, das in gasförmiger Phase zugeführt wird, an der Wandung kondensieren. Bei dieser Operation wird der Druck der gasförmigen Phase entsprechend der dazu an der wandung benötigten Temperatur geregelt. Wenn mindestens zwei Kristallisatoren vorhanden sind, kann in einem Kristallisator kristallisiert und im anderen Kristallisator Kristallisat abgeschmolzen werden. Es arbeitet somit jeweils ein Kristallisator als Kondensator und ein anderer Kristallisator als Verdampfer einer Kältemaschine. Auf diese Weise wird sowohl die Kälteenergie als auch die Abwärme der Kältemaschine direkt verwendet. Dies führt zu einer erheblichen Energieersparnis gegenüber dem bekannten Verfahren.

Das in der EP-A-0 715 870 beschriebene Verfahren sieht auch vor, beim Abschmelzen des Kristallisats gewünschtenfalls noch zusätzliche Wärmeenergie zuzuführen. Zu diesem Zweck dient ein Hilfsverdampfer, der über Rohrleitungen und Ventile an einem oder mehreren Kristallisatoren angeschlossen werden kann, welche die zusätzliche Wärmeenergie benötigen. So ist z.B. es möglich, das Abschmelzen des Kristallisats rascher durchzuführen als wenn lediglich die Energie aus einem anderen Kristallisator zur Verfügung stehen würde. Allgemein wird durch die Möglichkeit der Zufuhr von externer Wärmeenergie eine flexiblere Verfahrensführung ermöglicht. Nachteilig ist jedoch der hierzu benötigte apparative Aufwand in Form von Rohrleitungen und Flüssigkeitsabscheider für das Kältemedium. Auch können sich Probleme durch Kondensation und daraus resultierenden Flüssigkeitsschläge ergeben.

Es ist Aufgabe der Erfindung das Verfahren gemäss der EP-A-0 715 870 dahingehend zu verbessern, dass es mit geringerem Investions- und Energieaufwand und höherer Betriebssicherheit durchgeführt werden kann.

Diese Aufgabe wird mit dem Verfahren gemäss Anspruch 1 gelöst.

Da erfindungsgemäss die zusätzliche Wärmeenergie nicht mittels eines separaten Hilfsverdampfers, sondern im Kristallisator selbst dem Medium zugeführt wird, entfallen der separate Hilfsverdampfer und die von diesem zu den Kristallisatoren führenden Rohrleitungen. Ebenso werden die damit verbundenen Probleme, wie Flüssigkeitsschläge und Druckverluste in den Rohrleitungen, vermieden.

Die Erfindung betrifft auch eine Vorrichtung gemäss Anspruch 6. Zweckmässigerweise ist bei dieser Vorrichtung das Heizregister innerhalb des Kristallisators im Sumpf für das flüssige Medium angeordnet. Es wäre aber auch möglich, das Heizregister in einem separaten Behälter anzuordnen, der mit dem Kristallisator kommuniziert, so dass sowohl im Kristallisator als auch im separaten Behälter die gleichen Druckverhältnisse herrschen. Diese Variante ist insbesondere dann zweckmässig, wenn eine bestehende Anlage umgerüstet werden soll, aber im jeweiligen Kristallisator kein Raum für den Einbau eines Heizregisters zur Verfügung steht.

Vorteilhaft ist im Mediumraum des Kristallisators eine Ein- und Auslasseinrichtung für gasförmiges Medium angeordnet, welche nach oben gerichtete Oeffnungen aufweist, wobei in Abstand über der Ein- und Auslasseinrichtung ein Tropfenabscheider angeordnet ist. Auf diese Weise wird verhindert, dass mit dem Aussauggas Tropfen von flüssigem Medium zum Kompressor hin mitgerissen werden.

Weitere Vorteile der in den Ansprüchen beschriebenen Ausführungsformen der Erfindung ergeben sich aus der nachfolgenden Beschreibung.

Es zeigt:
- Fig.1: eine schematische Darstellung des erfindungsgemässen Kühlsystems für eine Anlage zur mehrstufigen fraktionierte Kristallisation, und
- Fig.2: einen Kristallisator, der sich insbesondere für ein Kühlsystem nach Figur 1 eignet.

Die Erfindung ist besonders vorteilhaft für die mehrstufige Kristallisation mit zwei oder mehr Kristallisatoren. Die Erfindung wird daher am Beispiel einer mehrstufigen Kristallisation beschrieben, ist aber nicht auf diese beschränkt. Da Anlagen zur mehrstufigen Kristallisation dem Fachmann bestens bekannt sind, braucht hier nicht auf Einzelheiten der Stofführung in solchen Anlagen eingegangen werden. Es kann vielmehr auf die einschlägige Fachliteratur verwiesen werden sowie auf die eingangs erwähnten Druckschriften.

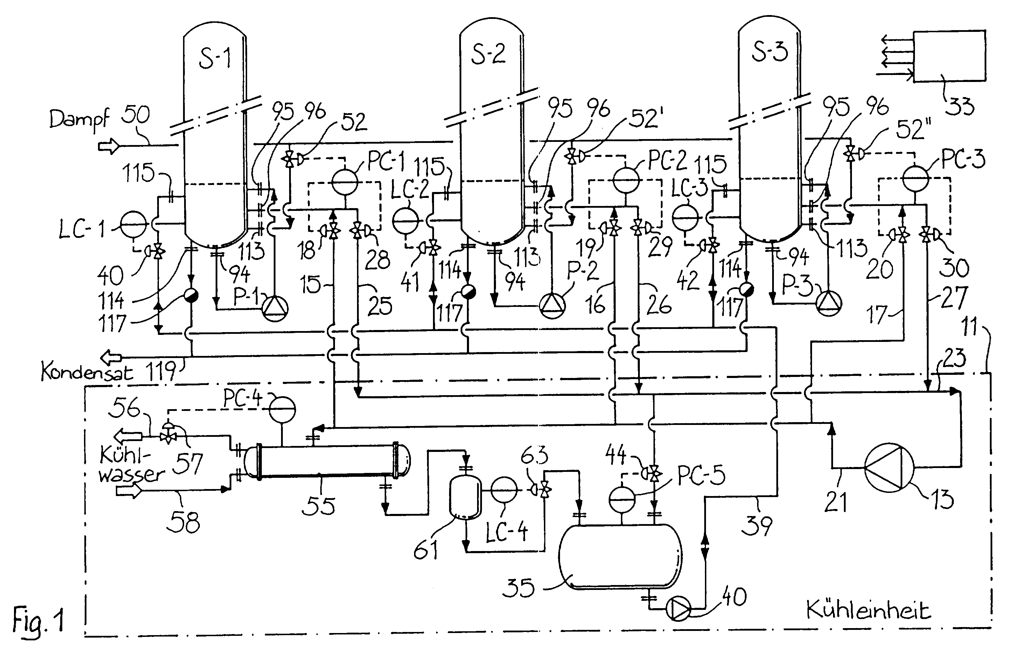

Bei der in Figur 1 dargestellten Kristallisationsanlage für die mehrstufige fraktionierte Kristallisation sind beispielsweise drei Kristallisatoren S-1, S-2 und S-3 vorgesehen. In der Regel sind immer mindestens zwei Kristallisatoren gleichzeitig im Betrieb und zwar der eine als Verdampfer und der andere als Kondensator einer Kühleinheit. Ein Kristallisator wirkt als Verdampfer, wenn kristallisiert wird und als Kondensator, wenn abgeschmolzen wird. Bei der erfindungsgemässen Anlage besteht somit die Kühlmaschine 11 nicht aus der üblichen Einheit von Kompressor 13 und Verdampfer und Kondensator. Verdampfer und Kondensator sind vielmehr aus der Einheit 11 ausgelagert und stellen einen Teil der Kristallisatoren S-1, S-2, S-3 dar. Dies setzt voraus, dass grundsätzlich immer mindestens einer der Kristallisatoren als Verdampfer mindestens ein anderer als Kondensator arbeitet, es sei denn, es sei zusätzlich ein Hilfskondensator oder ein Hilfsverdampfer vorhanden. Aber auch wenn viele Kristallisatoren gleichzeitig als Verdampfer bzw. Kondensatoren verschiedener Verfahrensstufen arbeiten, kann bei jedem Kristallisator die Temperatur der Wandung, an welcher das Kristallisat gebildet oder abgeschmolzen wird, verschieden gehalten werden. Zu diesem Zweck muss bloss der Druck der gasförmigen Phase des Mediums im jeweiligen Kristallisator entsprechend der an der Wandung benötigten Temperatur geregelt werden.

Wenn zum Abschmelzen von Kristallisat mehr Wärmeenergie benötigt wird als beim Kristallisieren Abwärme anfällt, muss zusätzlich Wärme zugeführt werden. Dies erfolgt erfindungsgemäss durch Zufuhr externer Wärmeenergie zum Medium im Kristallisator, wie dies nachfolgend noch näher beschrieben wird.

Der Steuerung des Druckes des gasförmigen Mediums in den Kristallisatoren S-1, S-2, S-3 dienen die an der Leitung 25, 26 bzw. 27 angeschlossenen Mess- und Steuergeräte PC-1, PC-2 und PC-3, wobei der Solldruck durch die Prozesssteuerung 33 bestimmt wird.

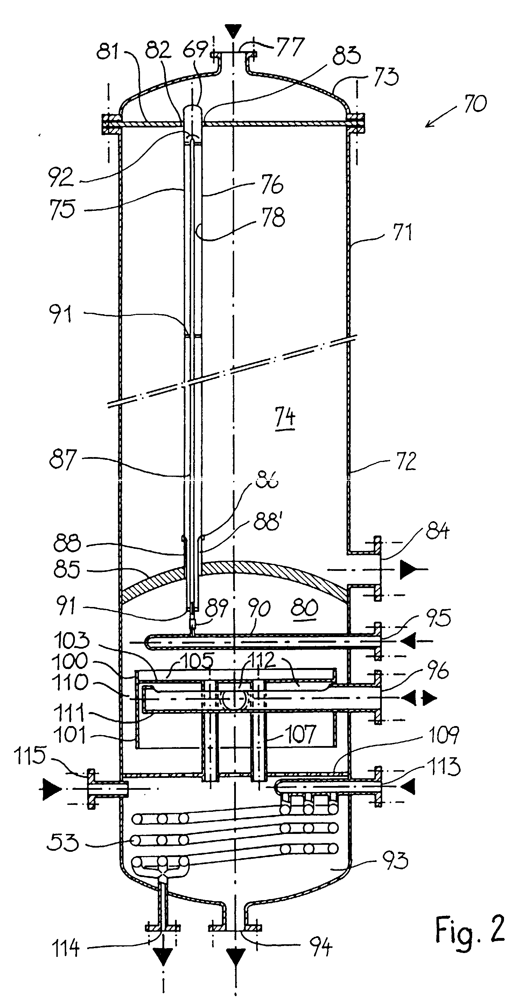

Von den Stutzen 96 der Kristallisatoren S-1, S-2, S-3 führt eine Leitung 25, 26, 27 zur Sammelleitung 23, welche zur Eingangseite des Kompressors 13 führt. In der Sammelleitung 23 herrscht ein relativ geringer Druck, z.B. 2 bar. Durch Regelklappen 28, 29, 30 kann der Druck des gasförmigen Mediums, z.B. Ammoniak, im Kristallisator beim Kristallisieren individuell geregelt werden. Dadurch wird die Verdampfungstemperatur des Mediums bestimmt, welches die Rohre 75 (Fig. 2) des Kristallisators kühlt.

Von der Druckseite des Kompressors 13 kann gasförmiges Medium, über eine Verteilleitung 21 und Zweigleitungen 15, 16, 17 zum Stutzen 96 des jeweiligen Kristallisators S-1, S-2, S-3 geführt werden. In der Verteilleitung 21 herrscht ein relativ hoher Druck, z.B. 14 bar. Durch Regelklappen 18, 19, 20 in den Zweigleitungen 15, 16, 17 kann der Druck des gasförmigen Mediums im jeweiligen Kristallisator S-1, S-2, S-3 beim Abschmelzen des Kristallisats individuell geregelt werden. Dadurch wird die Kondensationstemperatur des Mediums bestimmt, welche die Rohre des Kristallisators heizt.

Die Sollwerte des Drucks und damit der Temperatur bei der Kristallisation und beim Abschmelzen können mittels der Prozesssteuerung 33 bestimmt werden.

Flüssiges Medium aus dem Sammeltank 35 kann den zu den Kristallisatoren S-1, S-2, S-3 über die Leitung 39 zugeführt werden. Dem Einlass des flüssigen Mediums aus dem Sammelbehälter 35 über die Leitung 39 in den Sumpf 93 (Fig.2) der Kristallisatoren S-1, S-2, S-3 dienen die Regel-Ventile 40, 41, 42, welche von den Flüssigkeitsniveau-Mess- und Steuergeräten LC 1, LC 2, LC 3 steuerbar sind. Eine Pumpe 40 kann vorgesehen werden, um das flüssige Medium in die Kristallisatoren zu pumpen.

Der Sammelbehälter 35, welcher an die Saugseite des Kompressors 13 angeschlossen ist, wird durch das Druckmess- und Steuergerät PC 5 und dem Ventil 44 auf konstantem Druck gehalten. So dient der der Sammelbehälter 35 auch als sogenannter Economiser. Der Druck im Sammelbehälter 35 wird so eingestellt, dass er sowohl für den Zulauf als auch für Rücklauf von flüssigem Medium zum bzw vom Kristallisator optimal liegt.

Für das Kristallisieren wird über den Stutzen 115 der Sumpf 93 des jeweiligen Kristallisators S-1, S-2, S-3 mit flüssigem Medium aus dem Sammelbehälter 35 gefüllt. Jeder Kristallisator S-1, S-2, S-3 hat seine eigene Umwälzpumpe P-1, P-2, P-3 für den Kühlmittelkreislauf vom Stutzen 94 zum Stutzen 95. Diese Pumpe arbeitet unabhängig vom Druck des Kompressors 13. Die Umlaufmenge muss daher nicht geregelt werden und die Pumpe hat keine Leistungsänderung während der Druckabsenkung beim Kühlen für den Kristallisationsvorgang. Der von der Pumpe zu überwindende Differenzdruck wird lediglich durch die statische Höhe und den Druckverlusten in den Rohrleitungen des Kreislaufs bestimmt.

Es ist wiederum die Prozesssteuerung 33, die bestimmt, welcher oder welche Kristallisatoren als Verdampfer arbeiten sollen und somit welches oder welche der Ventile 40, 41, 42 geöffnet oder geschlossen werden muss.

Das Abschmelzen des Kristallisats kann in wesentlich kürzerer Zeit durchgeführt werden als die Bildung des Kristallisats. Soll somit, wenn bei einem Kristallisator kristallisiert wird, bei einem anderen Kristallisator Kristallisat abgeschmolzen werden, so reicht die von der Kühleinheit 11 gelieferte Abwärme nicht aus, um das Abschmelzen schneller als das Kristallisieren durchzuführen. Es muss somit Fremdwärme zugeführt werden. Zur Lieferung zusätzlicher Wärmeenergie ist im jeweiligen Kristallisator ein Heizregister vorgesehen. Das jeweilige Heizregister 53 (Fig.2) kann über die Leitung 50 und das Ventil 52,52',52" beispielsweise mit Abdampf betrieben werden. Das Ventil 52,52',52" wird entsprechend dem von der Prozesssteuerung 33 bestimmten Solldruck und dem vom Druckmess- und Steuergerät PC-1, PC-2, bzw. PC-3 gemessenen Druck gesteuert. Der Auslassstutzen 114 des jeweiligen Heizregisters 53 ist über einem Flüssigkeitsabscheider 117 an die Kondensatabführleitung 119 angeschlossen.

Zum Abführen überschüssiger Wärmeenergie ist ein Hilfskondensator 55 vorgesehen. Der Hilfskondensator 55 ist über die Leitungen 56, 58 und das Ventil 57 an einen Kühlwasserkreislauf anschliessbar. Es kann aber auch ein luftgekühlter Kondensator vorgesehen werden. Der Hilfskondensator 55 ist an die Verteilleitung 21 angeschlossen, um dieser gasförmiges Medium zu entnehmen und zu kondensieren, wenn weniger Abwärme verbraucht werden sollte als die Kühleinheit 11 im Moment liefert. Das Ventil 57 wird entsprechend dem von der Prozesssteuerung 33 bestimmten Solldruck und dem Mess- und Steuergerät PC-4 gesteuert. Das vom Hilfskondensator 55 verflüssigte Medium kann in den Tank 61 fliessen, der als Vorlage für den Sammeltank 35 dient. Mit dem Bezugszeichen LC-4 ist ein Flüssigkeitsniveau-Mess- und Steuergerät bezeichnet, welches das Ventil 63 steuert. Die Zufuhr von flüssigem Medium vom Tank 61 zum Sammelbehälter 35 erfolgt also über das Ventil 63.

Die Kristallisatoren S-1, S-2, S-3 aller Stufen können den gleichen Aufbau haben. Ein Ausführungsbeispiel eines Kristallisators ist in Figur 2 dargestellt. Der Kristallisator 70 besteht im wesentlichen aus einem Behälter 71, welcher oberhalb des Verteilerbodens 81 mit einem Deckel 73 abgeschlossen ist. Im Behälter 71 ist eine Vielzahl von Rohren 75 angeordnet (nur eines ist eingezeichnet). Sie bilden die Wandung, an der die Kristallisation stattfindet. An den Aussenwänden 76 der Rohre 75 kann das flüssige Gemisch in Form eines Rieselfilms herabfliessen. Der Einlass 77 für das flüssige Gemisch befindet sich im Deckel 73. Der Verteilerboden 81 besitzt eine Vielzahl von Oeffnungen 82, durch welche die am oberen Ende 69 abgeschlossenen Rohre 75 nach oben ragen. Durch den Spalt 83 kann dann das flüssige Gemisch als Rieselfilm nach unten fliessen. Dabei bildet sich wegen der Kühlung des Rohres 75 an der äusseren Wand 76 das gewünschte Kristallisat. Der Auslass 84 befindet sich beim Produktboden 85. Vom Auslass 84 kann das flüssige Gemisch durch eine nicht eingezeichnete Umwälzpumpe in bekannter Weise zum Einlass 77 rezirkuliert werden, bis der Kristallisationsvorgang in dieser Stufe beendet ist.

Der Kristallisator 70 kann abwechslungsweise als Verdampfer oder als Kondensator dienen. Zu diesem Zweck befindet sich im Innern jedes Rohrs 75 ein Steigrohr 87, das von einem aus Montagegründen vorgesehenen Schraubanschluss 89 bei der Steigrohrplatte 90 in das Rohr 75 führt. In diesem wird das Steigrohr 87 durch Abstandhalter 91 zentriert. In einem Abstand vom oberen Ende des Steigrohrs 87 ist ein Kühlmittelverteiler 92 angeordnet, der dafür sorgt, dass das Kühlmittel verwendete Medium in Form eines Rieselfilms an der Innenwand 78 des Rohres 75 nach unten fliesst, um das Rohr 75 zu kühlen. Bei dieser Anordnung des Kühlmittelverteilers 92 wird der obere Teil des Rohrs 75 und der Verteilerboden 81 nicht gekühlt, so dass das flüssige Gemisch immer ungehindert durch den Spalt 83 fliessen kann. Arbeitet jedoch der Kristallisator als Kondensator zum Schmelzen des Kristallisats, so wird durch das im Rohr 75 kondensierende Medium auch der obere Teil des Rohrs beheizt.

In einem Abstand vom vorzugsweise gewölbten Produktboden 85 ist am Rohr 75 ein Absatz 86 vorgesehen, der z.B. aus einem am Rohr 75 befestigten Ring besteht und die Aufgabe besitzt, das am Rohr 75 sich bildende Kristallisat nicht abrutschen zu lassen. Ein vorzugsweise im Rohrinnern angeordnetes Ablenkrohr 88 für den Rieselfilm reicht bis zum Absatz 86 und verhindert eine Kristallisatbildung im Bereich unterhalb des Absatzes 86. Zwischen dem Rohr 75 und dem Ablenkrohr 88 befindet sich ein Hohlraum 88'. Arbeitet der Kristallisator als Kondensator, so wird durch das im Hohlraum 88' an der Wandung des Rohrs 75 kondensierende Medium auch der untere Abschnitt des Rohrs 75 beheizt.

Beim Kristallisieren unverdampftes Medium oder beim Abschmelzen oder Schwitzen sich bildendes Medium-Kondensat kann in den Sumpf 93 abfliessen. Von dort kann das flüssige Medium über den Stutzen 94 abgelassen und zum Stutzen 95 umgepumpt werden. Der Stutzen 96 dient dem Ablassen des verdampften Mediums bei der Kristallisation bzw. der Zufuhr von gasförmigen Medium beim Abschmelzen des Kristallisats.

Es ist nun zu beachten, dass der Kristallisator 70 durch den Produktboden 85 in zwei Räume 74, 80 aufgetrennt ist, zwischen welchen erhebliche Druckunterschiede bestehen können. So herrscht im Kristallisationsraum 74 gewöhnlich Umgebungsdruck oder bloss leichter Ueberdruck, im Mediumraum 80 hingegen z.B. ein Druck in der Grössenordnung von 14 bar. Es ist nun von grosser Bedeutung, dass nicht durch irgendein Leck Medium in den Produktraum 74 gelangen kann. Beim erfindungsgemässen Aufbau des Kristallisators 70 sind keine zu Undichtigkeiten Anlass gebende Verschraubungen von Kristallisatorrohren 75 notwendig. Weil das Medium durch ein Steigrohr 87 in den Oberteil des Rohrs 75 geführt wird, kann das Rohr 75 am oberen Ende 69 zugeschweisst sein. Unten kann das Rohr 75 in den Produktboden 85 eingeschweisst sein, der seinerseits mit dem Mantel 72 des Behälters 71 verschweisst sein kann. Solche Schweissverbindungen sind im Betrieb des Kristallisators gasdicht. Ein weiterer Vorteil der gezeigten Konstruktion besteht darin, dass sich die Rohre 75 im Verteilerboden 81 frei bewegen können. Es besteht somit keine Gefahr, dass ein Rohr 75, bei dem die Kühlung oder Heizung ausfällt und somit anders als die anderen Rohre kontrahiert und expandiert, beschädigt wird.

Nachfolgend wird noch auf die besondere Ausbildung des Kristallisators 70 im Mediumraum 80 eingegangen. Unterhalb der Steigrohrplatte 90 befindet sich ein Tropfenabscheider 100 für von oben aus den Rohren 75 tropfendes flüssiges Medium. Ein konzentrisch im Behälter 71 angeordnetes Rohrstück 101 weist in seinem Innern etwas unterhalb des oberen Rades eine Platte 103 auf, welche zusammen mit dem Rohrstück 101 eine zylindrische Auffangwanne 105 für das abtropfende Medium bildet. Ein oder mehrere Ablaufrohre 107 führen von der Auffangwanne 105 zum Sumpf 93 unterhalb des Siebbodens 109. Unter der Auffangwanne 105 ist eine an den Stutzen 96 angeschlossene Ein- und Auslasseinrichtung 111 für gasförmiges Medium angeordnet, die vorteilhaft aus einem Rohrkreuz besteht, welches oben Schlitze 112 aufweist.

Bei der Kristallisation anfallendes gasförmiges Medium fliesst mit relativ grosser Geschwindigkeit, etwa 9 m/sec, durch den Ringspalt 110, wobei mitgerissene Tropfen flüssiges Medium auf den Siebboden 109 fallen und in den Sumpf 93 abfliessen. Das gasförmige Medium wird hingegen an dem Siebboden 109 nach oben abgelenkt. Die Geschwindigkeit der aufsteigenden Gase ist relativ gering, etwa 0,25 m/sec. An der Platte werden sie wieder nach unten abgelenkt und können über die Einrichtung 111 und den Stutzen 96 abfliessen. Der Tropfenabscheider 100 verhindert, dass mit dem über den Stutzen 96 abgesaugte Gas Tropfen zum Kompressor 13 mitgerissen werden.

Unter dem Siebboden 109 befindet sich der Sumpf 93 mit dem Einlass 115 für flüssiges Medium. Im Sumpf 93 ist das Heizregister 53 angeordnet, welches einen Einlassstutzen 113 für Dampf und einen Auslassstutzen 114 aufweist. Das Heizregister 53 hat z.B. die Form einer Rohrschlange oder die Form eines Plattenwärmetauschers. Es ist möglich, den Kristallisator auch so auszubilden, dass flüssiges Medium das Heizregister berieselt.

Vor dem Schmelzen des Kristallisats wird das überschüssige flüssige Medium im Sumpf 93 gesteuert durch das Flüssigkeits-Mess- und Steuergerät LC-1, LC-2 oder LC-3 aus dem Sumpf 93 abgelassen bis das Heizregister 53 nur noch teilweise oder nicht mehr im flüssigen Medium eingetaucht ist. Die Förderung des flüssigen Mediums in den Sammeltankbehälter 35 wird durch den im Kristallisator herrschenden Druck bewirkt.

Bei Bedarf kann das jeweilige Heizregister 53 beim Schmelzen des Kristallisats zugeschaltet werden. Die Dampfzufuhr zum jeweiligen Heizregister 53 wird über ein auf das Ventil 52,52',52'' wirkende Druckmess- und Steuergerät PC-1, PC-2, bzw. PC-3 gesteuert. Der jeweilige Auslassstutzen 114 für das Kondensat ist über einen belüfteten Kondensatableiter 117 an die Kondensatablassleitung 119 angeschlossen. Dies bewirkt eine totale Entleerung und verhindert Frostschäden.

Es sind verschiedene Aenderungen möglich, ohne vom Erfindungsgedanken abzuweichen. So ist es auch möglich, bei einem Kristallisator gemäss der DE-A-1 799 123 das flüssige Medium im Kristallisator zu versprühen, um die Rohre aussen zu benetzen.

Die Erfindung ist auch nicht auf das dargestellte Beispiel des Fallfilm-Kristallisation beschränkt. Die Erfindung ist vielmehr auch auf andere Kristallisationsverfahren anwendbar, z.B. auf statische Kristallisation. So ist es möglich, statt Rohre 75 Kühlelemente anderer Formgebung zu verwenden.

## Patentansprüche

1. Verfahren zur Stofftrennung aus einem flüssigen Gemisch mittels fraktionierter Kristallisation, bei welchem Verfahren in einem Kristallisator (z.B. S-1) eine Kristallschicht an einer Seite (76) einer Wandung (75) abgeschieden wird indem die andere Seite (78) der Wandung (75) durch Verdampfen eines flüssigen Mediums unter Regelung des Drucks einer gasförmigen Phase entsprechend der für die Kristallisation benötigte Temperatur gekühlt wird und dann zum Schwitzen und/oder zum Abschmelzen der Kristallisationsschicht die genannte andere Seite der Wandung durch gasförmiges Medium, das beim Verdampfen bei der Kristallisation in einem weiteren Kristallisator (z.B. S-2) anfällt, unter Regelung seines Drucks entsprechend der für das Abschmelzen benötigten Temperatur beheizt wird, wobei bei Bedarf zusätzlich Wärmeenergie dem erstegenannten Kristallisator zur Verdampfung von flüssigem Medium zugeführt wird.

2. Verfahren nach Anspruch 1, dadurch gekennzeichnet, dass dem Medium überschüssige Wärmeenergie nachträglich mittels eines Hilfskondensators (55) wieder entzogen wird.

3. Verfahren nach Anspruch 1 oder 2, dadurch gekennzeichnet, dass das zur Kristallisation an der Wandung (78) zu verdampfende flüssige Medium im Kreislauf durch den Kristallisator geführt wird.

4. Verfahren nach Anspruch 3, dadurch gekennzeichnet, dass das flüssige Medium vom Sumpf (93) des Kristallisators nach oben gepumpt und als Rieselfilm an der Wandung (78) hinunterfliessen gelassen wird.

5. Verfahren nach einem der Ansprüche 1 bis 4, dadurch gekennzeichnet, dass flüssiges Medium in einem Sammelbehälter (35) gespeichert wird und dass in diesem Sammelbehälter (35) ein Druck in solcher Höhe aufrechterhalten wird, dass die herrschende Druckdifferenz zwischen Sammelbehälter (35) und dem jeweiligen Kristallisator (S-1,S-2,S-3) es erlaubt, zu Beginn der Kristallisation flüssiges Medium in den Kristallisator zu fördern und zu Beginn des Schwitzens oder Abschmelzens flüssiges Medium aus dem Kristallisator zum Sammeltank (35) zu fördern.

6. Vorrichtung mit mindestens einem ein Gehäuse (71) aufweisenden Kristallisator (70), bei welchem ein Kristallisationsraum (74) von einem Mediumraum (80) durch eine Wandung (75) abgetrennt ist, an welcher Kristallisat abgeschieden werden kann, und der Mediumraum (80) mindestens einen Einlass (95) und einen Auslass (94) für flüssiges Medium und mindestens einen Anschluss (96) zum Ein- und Auslass von gasförmiger Phase des Mediums aufweist, Mitteln (PC-1,PC-2,PC-3) um den Druck der gasförmigen Phase im Kristallisator zu regeln, und einem dem Kristallisator zugeordneten Heizregister (53) zur Verdampfung von flüssigem Medium.

7. Vorrichtung nach Anspruch 6, dadurch gekennzeichnet, dass das Heizregister (53) im Sumpf (93) für das flüssige Medium im Kristallisator (70) angeordnet ist.

8. Vorrichtung nach Anspruch 7, gekennzeichnet durch einen Hilfskondensator (55).

9. Vorrichtung nach einem der Ansprüche 6 bis 8, dadurch gekennzeichnet, dass im Mediumraum (80) des Kristallisators eine Ein- und Auslasseinrichtung (111) für gasförmiges Medium angeordnet ist, welche nach oben gerichtete Oeffnungen (112) aufweist und dass in Abstand über der Ein- und Auslasseinrichtung ein Tropfenabscheider (100) angeordnet ist.

10. Vorrichtung nach Anspruch 9, dadurch gekennzeichnet, dass die Ein- und Auslasseinrichtung (111) die Form eines Rohrkreuzes besitzt, welches oben Oeffnungen in Form von Schlitzen (112) aufweist.

11. Vorrichtung nach Anspruch 9 oder 10, dadurch gekennzeichnet, dass der Tropfenabscheider (100) aus einem konzentrisch im Kristallisatorgehäuse (71) angeordnete, einen Ablauf (107) aufweisende Auffangwanne (105) mit über dem Wannenboden (103) nach unten gezogenen Rand (101) besteht, wobei ein Ringspalt (110) zwischen der Wandung des Gehäuses (71) und dem Tropfenabscheider (100) besteht.

12. Vorrichtung nach einem der Ansprüche 9 bis 11, dadurch gekennzeichnet, dass in einem Abstand unterhalb der Ein- und Auslasseinrichtung für gasförmiges Medium (111) und ein Siebboden (109) angeordnet ist.

13. Vorrichtung nach einem der Ansprüche 6 bis 12, dadurch gekennzeichnet, dass jeder Kristallisator eine Pumpe (P-1,P-2,P-3) zum Fördern von flüssigem Medium zur Kühlung der Wandung, an welcher das Kristallisat abgeschieden werden kann, aufweist.

14. Vorrichtung nach einem der Ansprüche 6 bis 13, dadurch gekennzeichnet, dass ein Sammelbehälter (35) für flüssiges Medium vorgesehen ist, in welchem der Druck des Mediums mittels eines Druckmess- und Steuergerätes (PC-4) des Mediums auf einem Wert gehalten werden kann, um durch die herrschende Druckdifferenz zwischen Sammelbehälter (35) und dem jeweiligen Kristallisator (S-1, S-2,S-3) je nach Betriebsart des Kristallisators flüssiges Medium in den Kristallisator bzw. in den Sammelbehälter (35) zu fördern.
